# EUROPÄISCHE PATENTSCHRIFT

(11) **EP 1 916 089 B1**
(45) Veröffentlichungstag und Bekanntmachung des Hinweises auf die Patenterteilung: **21.07.2010**
(21) Anmeldenummer: 07015837.3
(22) Anmeldetag: 11.08.2007
(51) Int. Cl.: B29C 47/90, B29C 47/92, B29C 47/22, B29C 47/88

(54) **Vorrichtung zun Extrudieren von Hohlsträngen**
Device for extruding hollow rods
Dispositif destiné à extruder des tiges creuses

(30) Priorität: 25.10.2006 DE 102006051104
(43) Veröffentlichungstag der Anmeldung: 30.04.2008
(73) Patentinhaber: INOEX GmbH, 32547 Bad Oeynhausen (DE)
(72) Erfinder: Diekhaus, Brigitte, 33659 Bielefeld (DE); Schmuhl, Jörg, Dr., 15711 Königs Wusterhausen (DE)
(74) Vertreter: Seewald, Jürgen

(56) Entgegenhaltungen:
- EP-A- 0 344 605
- EP-A- 1 923 199
- DE-A1- 10 021 728
- DE-A1-102005 031 747
- JP-A- 3 043 215
- JP-A- 2002 240 132
- JP-A- 2004 264 758
- US-B1- 6 478 992

## Beschreibung

Die vorliegende Erfindung betrifft eine Vorrichtung zum Extrudieren von Hohlsträngen aus thermoplastischem Kunststoff gemäß dem Oberbegriff des Anspruchs 1.

In der DE 697 13 645 T2 ist eine Vorrichtung zur Innenkühlung eines Hohlprofils, in diesem Falle ein Kunststoffrohr, mittels Kühlluft beschrieben. Dazu ist in den hohlen Dorn eines Extruderkopfes ein vorn geschlossener Hohlzylinder eingeschoben, der in die nachfolgende Kalibriereinheit hinein ragt, wobei zwischen der Außenwand des Hohlzylinders und der Innenwandung des extrudierten Rohres ein Ringspalt verbleibt. Der Hohlzylinder ist doppelwandig und wird durch eine zentrale Zuleitung, die in die vordere Stirnwand des Hohlzylinders mündet, mit Kühlwasser versorgt. Dieses strömt von seiner Einlassstelle in der vorderen Stirnwand des Hohlzylinders radial nach außen und dann durch den zylindrischen Doppelmantel zum Extruderkopf zurück. Im Bereich des Dorns ist der Doppelmantel konisch einwärts gebogen und legt sich an den Umfang des zentralen Kühlwasserzuleitung an. Die Kühlluft wird in Extrusionsrichtung in den Hohlzylinder eingeblasen und an dem durch den Doppelmantel gebildeten Konus nach außen auf die Wandung des Hohlzylinders abgelenkt. Dort sind Durchtrittsöffnungen vorgesehen, durch die hindurch die Kühlluft in den Ringspalt fließt. Sie überstreicht dort die Innenwandung des extrudierten Rohres und kühlt dieses ab. Die von der Kühlluft aufgenommene Wärme wird zumindest teilweise durch das im Gegenstrom im Doppelmantel fließende Kühlwasser wieder abgeführt, so dass die Kühlluft über die gesamte Länge des Ringspalts Wärme vom extrudierten Rohr abführen kann.

In der US 4 545 751 ist eine Vorrichtung zur Innenkühlung eines in einer Extrusionslinie hergestellten Wellrohres beschrieben. An den Dorn des Extruderkopfes dieser Vorrichtung ist in Verlängerung ein Gehäuse angeschraubt, welches bis in eine umlaufende Form für die Erzeugung der Wellung des zu produzierenden Rohres hinein reicht. In dem Gehäuse ist eine Ranquesche Wirbelkammer angeordnet, deren Kühlluftausgang in das Gehäuse mündet. Dieses besitzt wiederum radiale Auslassöffnungen, durch die die Kühluft in den extrudierten, an der Form anliegenden Hohlstrang strömt und diesen von innen kühlt.

Seit einigen Jahren sind Ausrüstungen verfügbar, die einen Dimensionswechsel eines extrudierten Kunststoffprofils während des laufenden Produktionsprozesses ermöglichen. Dazu gehören Kalibrierhülsen, deren Querschnitt in relativ weiten Grenzen veränderbar ist und die einen in Anpassung an die Qerschnittsänderung radial verstellbaren Einlauf besitzen. Eine derartige Kalibrierhülse ist in der DE 10 2005 002 820 B3 beschrieben.

Die eingangs beschriebenen, zum Stand der Technik gehörenden Vorrichtungen zur Innenkühlung von extrudierten Hohlsträngen in einer Kalibriereinrichtung sind insbesondere aufgrund ihrer radialen Abmessungen nicht in für einen Dimensionswechsel im laufenden Betrieb ausgelegten Kalibriereinrichtungen, insbesondere bei kleinen Querschnitten der Hohlstränge, verwendbar.

Dies gilt auch für eine in der nachveröffentlichten DE 10 2005 031 747 A1 offenbarte Vorrichtung zum Extrudieren von Hohlsträngen aus thermoplastischem Kunststoff. Diese weist unter anderem einen Extruderkopf mit Dorn sowie eine Kalibriereinrichtung auf. In dem Dorn ist mindestens eine Ranquesche Wirbelkammer ausgebildet, deren Kühlluftausgang in den Innenraum des extrudierten Hohlprofils führt.

Das Dokument DE 100 21 728 A1 offenbart auch eine Vorrichtung zum Extrudieren von Höhlsträngen aus thermoplastischem Kunststoff gemäß dem Oberbegriff des Anspruchs 1.

Aufgabe der vorliegenden Erfindung ist es, Abhilfe zu schaffen und eine Vorrichtung zur Verfügung zu stellen, mit der eine effektive Innenkühlung in für einen Dimensionswechsel im laufenden Betrieb ausgelegten Kalibriereinrichtungen erreicht wird.

Diese Aufgabe wird erfindungsgemäß mit einer Vorrichtung gelöst, die die Merkmale des Anspruchs 1 aufweist.

Die vorliegende Erfindung nutzt das bekannte Phänomen des Ranqueschen Wirbelrohrs, um auf einfache Weise ein Kühlgas zu erzeugen, welches zur Innenkühlung eines extrudierten Hohlstranges genutzt wird. Dabei benötigt das Wirbelrohr keinen zusätzlichen Platz vor dem Extrusionswerkzeug, da es in dessen Dorn hinein verlegt ist. Dort kann auch die im Wirbelrohr erzeugte Heißluft sinnvoll verwendet werden, z.B. indem der Dorn zusätzlich erwärmt wird. Das im Wirbelrohr erzeugte Kühlgas wird über das Kühlrohr, gewissermaßen wie mit einer Injektionsnadel, in die Kalibriereinrichtung überführt und steht dort für eine effektive Innenkühlung zur Verfügung. Da das Kühlrohr in seinem Querschnitt nur auf die zu transportierende Kühlgasmenge ausgelegt werden muß, können seine radialen Abmessungen klein gehalten werden, so dass es die bei einem Dimensionswechsel erforderlichen radialen Verstellwege der Kalibriereinrichtung nicht behindert bzw. nicht unmöglich macht.

Weitere vorteilhafte Ausgestaltungen der Erfindung ergeben sich aus den Unteransprüchen.

Die Erfindung wird nachstehend anhand von Ausführungsbeispielen einer Rohrextrusionslinie näher erläutert. In der dazugehörigen Zeichnung zeigt:
- Fig. 1: eine schematische Seitenansicht einer Extrusionslinie,
- Fig. 2: einen vergrößerten schematischen Ausschnitt A gemäß Fig. 1 in Schnittdarstellung,bei in einem ersten Betriebszustand befindlicher Vorrichtung,
- Fig. 3: einen vergrößerten Ausschnitt aus Fig. 2,
- Fig. 4: eine Darstellung gemäß Fig. 3 bei in einem anderen Betriebszustand befindlicher Vorrichtung,
- Fig. 5: einen schematischen Querschnitt durch den Dorn eines Extruderkopfes in einer ersten Ausführungsform einer Ranqueschen Wirbelkammer, und
- Fig. 6: eine Darstellung gemäß Fig. 5 in einer zweiten Ausführungs- form der Ranqueschen Wirbelkammer.

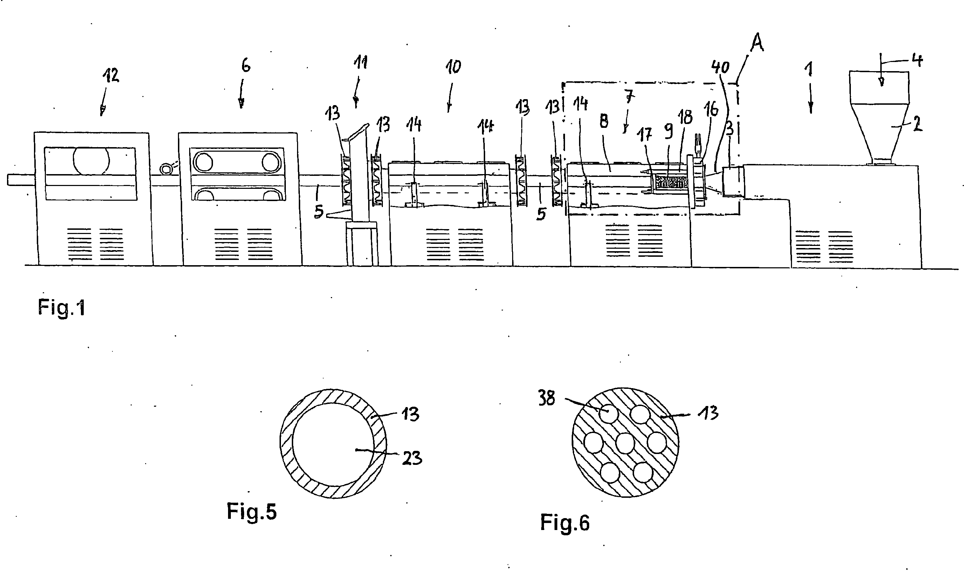

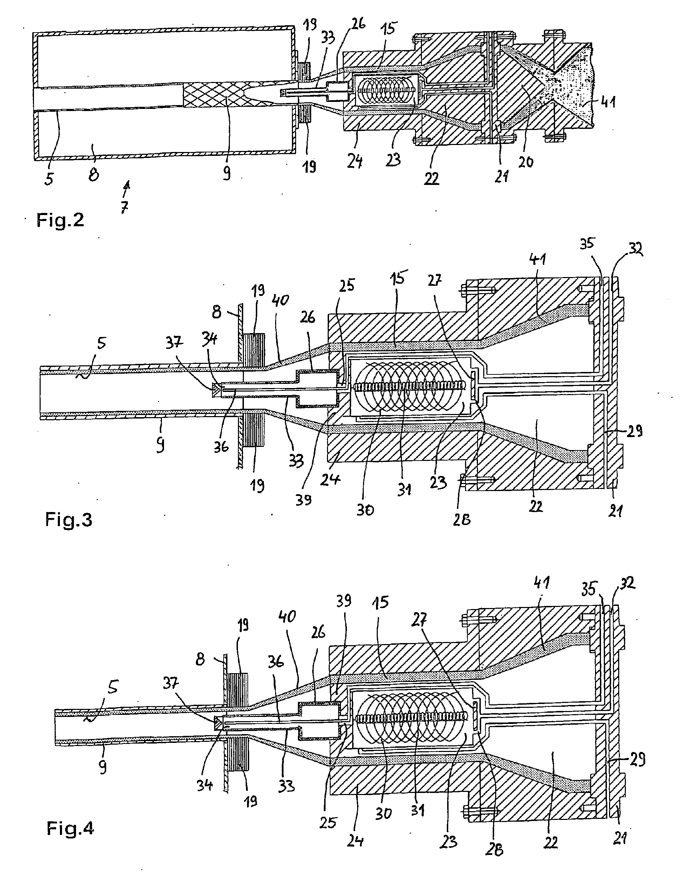

Die in Figur 1 dargestellte Extrusionslinie zur Herstellung von Rohren umfasst eine Extrudereinheit 1 mit einem Aufgabetrichter 2, einer aus der Zeichnung nicht ersichtlichen Extruderschnecke und einem Rohrkopf 3. Über den Aufgabetrichter 2 wird ein thermoplastischer Kunststoff 4 in Granulat- oder Pulverform der Extrudereinheit 1 zugeführt. In dieser wird das Granulat bzw. Pulver erwärmt, geknetet und plastifiziert. Anschließend wird der Kunststoff 4 als formbare Masse durch die Extruderschnecke in den Rohrkopf 3 gefördert und dort durch einen Ringspalt 15 (siehe Fig. 2 bis 4) gedrückt.

Nach dem Austritt aus dem Ringspalt 15 wird das heiße, noch verformbare Rohr 5 mittels eines am Ende der Extrusionslinie angeordneten Raupenabzugs 6 durch eine Kalibrier- und Kühleinheit 7 gezogen, die einen Vakuumtank 8 mit einer an dessen Eingang angeordneten Kalibrierhülse 9 aufweist. Die Kalibrierhülse 9 ist stufenlos im Durchmesser einstellbar, so dass das extrudierte, noch formbare Rohr 5 auf den gewünschten Außendurchmesser fixiert werden kann. Nach dem Verlassen der Kalibrier- und Kühleinheit 7 tritt das Rohr 5 in eine Kühlstrecke 10 ein, in der es auf Raumtemperatur abgekühlt wird. Zwischen der Kühlstrecke 10 und dem Raupenabzug 6 ist ein Ultraschallscanner 11 angeordnet, mit dem der Durchmesser und die Wanddicke des extrudierten Rohres 5 erfasst werden. Dem Raupenabzug 6 schließt sich eine Trennsäge 12 an, in der das Rohr 5 abgelängt wird. Zur Aufrechterhaltung eines Unterdrucks in der Kalibrier- und Kühleinheit 7, der Kühlstrecke 10 und dem Ultraschallscanner 11 sind Dichtungen 13 vorgesehen, die das durchlaufende Rohr 5 abdichtend umschließen.

Da das extrudierte Rohr 5 erst nach Verlassen der Kühlstrecke 10 ausgehärtet, d. h. formstabil ist, muss es zuvor abgestützt werden, um ein Durchhängen und damit Deformieren zu vermeiden. Dazu sind in der Kühlstrecke 10 zwei und in der Kalibrier- und Kühleinheit 7 eine Rohrunterstützung 14 vorgesehen.

Die Kalibrierhülse 9 besitzt einen ringförmigen Einlaufkopf 16 und einen ringförmigen Auslasskopf 17. Während der Einlaufkopf 16 außerhalb des Vakuumtanks 8 angeordnet ist, befindet sich der Auslasskopf 17 im Vakuumtank 8 (Fig. 1). Der Auslasskopf 17 hat einen fixen Innendurchmesser, der mindestens dem größten in der Extrusionsanlage zu fahrenden Rohrdurchmesser entspricht. Er ist gegenüber dem ortsfesten Einlaufkopf 16 in Axialrichtung der Kalibrierhülse 9 verlagerbar, um deren Durchmesser zu ändern. Dazu sind mindestens zwei Spindeleinheiten 18 vorgesehen, deren Gewindespindeln motorisch angetrieben werden.

Der Einlaufkopf 16 weist radial verstellbare Segmente 19 auf (Fig. 2 bis 9), die gleichmäßig auf den Umfang des zu kalibrierenden Rohres 5 angeordnet sind und einen konischen Einlauf der Kalibrierhülse 9 bilden. Zum weiteren Aufbau der Kalibrierhülse 9 wird auf die DE 2005 002 820 B3 verwiesen. Diese Kalibrierhülse 9 ist, so wie die übrigen Ausrüstungen der Extrusionslinie auch, zum Dimensionswechsel bei laufender Produktion geeignet.

In dem in den Figuren 2 bis 4 gezeigten vorderen Ende des Rohrkopfes 3 wird die von der Extruderschnecke geförderte Kunststoffschmelze 41 ringförmig aufgeteilt. Dazu ist eine Dornhalterspitze 20 vorgesehen, die kegelförmig in den Strom der Kunststoffschmelze 41 hineinragt. An die Dornhalterspitze 20 schließt sich eine Dornhalterstegplatte 21 an, über die ein Dorn 22 des Rohrkopfes 3 mit der Dornhalterspitze 20 durch Verschraubung verbunden ist. Der Dorn 22 geht an seinem vorderen Ende in einen Hohlzylinder 23 über, in dessen Bereich der Dorn 22 unter Belastung des Ringspalts 15 von einem hohlzylindrischen Mundstück 24 umgeben ist, welches mit dem Dorn 22 durch Verschraubung verbunden ist. Der Ringspalt 15 setzt sich durch den Dorn 22 hindurch bis zur Dornhalterspitze 20 fort. In der Dornhalterstegplatte 21 ist der Ringspalt 15 jeweils im Winkel von 90 Grad durch Materialstege unterbrochen (nicht dargestellt), die aber für den Fluss der Kunststoffschmelze 41 nicht störend sind.

Der Hohlzylinder 23 ist an seinem vorderen Ende durch eine Blende 39 geschlossen, die eine zentrale Auslassöffnung 25 aufweist, die in eine Sammelkammer 26 mündet. Am gegenüberliegenden Stirnende des Hohlzylinders 23 ist ebenfalls eine Blende 27 vorgesehen, die an ihrem Umfang eine ringförmige Auslassöffnung 28 freigibt. In der Dornhalterstegplatte 21 ist eine Luftzuführungsbohrung 29 angeordnet, die in der Nähe der Mittelachse des Dorns 22 rechtwinklig zum Dorn 22 hin abgewinkelt ist, und in diesem bis zum vorderen Ende des Hohlzylinders 23 fortgesetzt wird. Dort mündet die Luftzuführungsbohrung 29 tangential in den Hohlzylinder 23 ein. Aufgrund dieser tangentialen Lufteinführung sowie der Auslässe 25 und 28 wirkt der Hohlzylinder 23 als Ranquesches Wirbelrohr. Diesem wird über die Luftzuführungsbohrung 29 Druckluft mit einem Druck von etwa 7 Bar und einer Temperatur von ca. 20 °C zugeführt.

Aufgrund dieser Luftzuführung in den Hohlzylinder 23 bilden sich in diesem zwei Luftströmungen aus: eine heiße Luftströmung 30 an Wandung des Hohlzylinders 23 und eine kalte Luftströmung 31 in der Nähe der Mittelachse des Dorns 22. Die heiße Luftströmung 30 verlässt den Hohlzylinder 23 über die Auslassöffnung 28 und strömt von dort über eine Luftabführungsbohrung 32, die sich in der Dornhalterstegplatte 21 fortsetzt, ab. Die heiße Luftströmung 30 hat eine Temperatur von bis zu 110 °C. Die Temperatur der kalten Luftströmung 31 beträgt etwa 0 °C bis 5 °C und strömt über die Auslassöffnung 25 in die Sammelkammer 26 ein. Aus der Sammelkammer 26 strömt die Kühlluft in ein Kühlrohr 33, welches sich in axialer Verlängerung des Dorns 22 durch die Segmente 19, d. h. durch den Einlauf der Kalibrierhülse 9, hindurch erstreckt und einen in die Kalibrierhülse 9 mündenden Kühlluftauslass 34 besitzt. Die aus dem Kühlrohr 33 ausströmende Kühlluft 31 kühlt das extrudierte Rohr 5 in sehr effektiver Weise zusätzlich zu der in dem Vakuumtank 8 stattfindenden Außenkühlung auf seiner Innenseite. Um eine Erwärmung der Kühlluft 31 auf ihrem Weg in die Kalibrierhülse 9 zu verhindern, sind die Sammelkammer 26 und das Kühlrohr 33 isoliert.

Um die Kühlung intensiver zu gestalten, wird der aus dem Kühlrohr 33 ausströmenden Kühlluft 31 Wasser beigemischt. Dazu ist eine Wasserzuführungsbohrung 35 vorgesehen, die sich durch die Dornhalterstegplatte 21 und den Dorn 22 bis in die vordere Blende 39 des Hohlzylinders 23 erstreckt und dort in eine dünne Rohrleitung 36 übergeht, die zentrisch durch die Sammelkammer 26 und das Kühlrohr 33 verläuft, und am Kühlluftauslass 34 endet.

Um die feuchte Kühlluftströmung effektiv in dem Bereich der Innenwandung des extrudierten Rohres 5 zu bringen, ist vor dem Kühlluftauslass 34 eine entsprechende Luftleiteinrichtung 37 vorgesehen, die in diesem Ausführungsbeispiel als Kegel ausgeführt ist.

Fig. 3 zeigt die Produktion eines Rohres 5 mit großem, Fig. 4 die Produktion eines Rohres 5 mit kleinem Durchmesser. Ein Vergleich beider Darstellungen zeigt, dass das Kühlrohr 33 und die Sammelkammer 26 weder die Segmente 19 in ihrer radialen Verstellbarkeit behindern noch den zwischen dem Rohrkopf 3 und der Kalibrierhülse 19 ausgebildeten Schmelzekonus 40 beeinträchtigen.

In den Figuren 5 und 6 sind zwei Ausführungsbeispiele für eine Ausbildung von Ranqueschen Wirbelrohren in dem Dorn 22 gezeigt. Das Beispiel nach Figur 5 entspricht dem oben erläuterten Ausführungsbeispiel gemäß den Figuren 2 bis 4. Hier ist der Dorn 22 mit einer Bohrung großen Durchmessers aufgebohrt, so dass der dadurch gebildete Hohlzylinder 23 als einzelnes und einziges Ranquesches Wirbelrohr wirkt. In diesem Falle ist die in den Figuren 2 bis 4 dargestellte Sammelkammer 26 nicht unbedingt erforderlich, d. h., das Kühlrohr 33 kann sich unmittelbar an die Auslassöffnung 25 anschließen.

In dem Ausführungsbeispiel gemäß Figur 6 sind im vorderen Bereich des Dorns 22 sieben Bohrungen 38 kleineren Durchmessers eingebracht, die jede für sich als Ranquesches Wirbelrohr fungieren. Jedes Wirbelrohr besitzt dann natürlich eine eigene tangentiale Luftzuführung sowie eigene Auslassöffnungen für die kalte und die warme Luftströmung, wobei die Auslässe für die Kaltluft in die Sammelkammer 26 münden.

## Patentansprüche

1. Vorrichtung zum Extrudieren von Hohlsträngen aus thermoplastischem Kunststoff mit einem einen Dorn (22) aufweisenden Extruderkopf (3) und einer Kalibriereinrichtung (9) zum Dimensionswechsel bei laufender Produktion mit radial verstellbarem Einlauf (19), **dadurch gekennzeichnet, dass** in dem Dorn (22) mindestens eine Ranquesche Wirbelkammer (23) ausgebildet ist, deren Kühlluftausgang (25) in ein Kühlrohr (33) führt, welches sich in axialer Verlängerung des Dorns (22) durch den Einlauf (19) der Kalibriereinrichtung (9) hindurch erstreckt und einen in die Kalibriereinrichtung (9) mündenden Kühlluftauslass (34) besitzt.

2. Vorrichtung nach Anspruch 1, **dadurch gekennzeichnet, dass** im Dorn (22) mehrere Wirbelkammern (23) angeordnet sind, deren Kühlluftausgänge (24) in eine Sammelkammer (26) münden, von der das Kühlrohr (33) abgeht.

3. Vorrichtung nach Anspruch 1 oder 2, **dadurch gekennzeichnet, dass** das Kühlrohr (33) und die Sammelkammer (26) isoliert sind.

4. Vorrichtung nach Anspruch 2 oder 3, **dadurch gekennzeichnet, dass** vor dem Kühlluftauslass (34) eine Leiteinrichtung (37) zur Ablenkung des Kühlluftstroms (31) zur Innenwandung des extrudierten Hohlstranges (5) angeordnet ist.

5. Vorrichtung nach Anspruch 4, **dadurch gekennzeichnet, dass** in den Kühlluftauslass (34) eine Wasserzuführleitung (36) mündet.

## Claims

1. Device for extruding tubes from thermoplastic material, comprising an extruder head (3) exhibiting a mandrel (22), and a metering mechanism (9) for alteration of dimension during running production with radially adjustable feed (19), **characterised in that** the mandrel (22) encloses at least one Ranque-Hilsch vortex tube (23), whose cooling air outlet (25) leads to a cooling pipe (33), which extends along the axial direction of the mandrel (22) through the feed inlet (19) of the metering mechanism (9) and possesses a cooling air outlet (34) leading to the metering mechanism (9).

2. Device according to claim 1, **characterised in that** the mandrel (22) encloses many vortex tubes (23), whose cooling air outlets (24) lead to a collecting chamber (26), from which the cooling pipe (33) branches off.

3. Device according to claims 1 or 2, **characterised in that** the cooling pipe (33) and the collecting chamber are insulated.

4. Device according to claims 2 to 3, **characterised in that** a guidance mechanism (37) is arranged upstream to the cooling air outlet (34) for deflection of the cooling air stream to the inner wall of the extruded tube (5).

5. Device according to claim 4, **characterised in that** a water inlet pipe (36) leads to the cooling air outlet (34).

## Revendications

1. Dispositif pour l'extrusion de corps creux en matériau thermoplastique avec une tête d'extrudeuse (3) présentant un mandrin (22) et avec un dispositif d'étalonnage (9) pour le changement de dimension en cours de production avec une admission (19) réglable radialement, **caractérisé en ce que** dans le mandrin (22), au moins une chambre de turbulences de Ranque (23) est formée dont la sortie d'air de refroidissement (25) mène à un tube de refroidissement (33) qui s'étend et traverse l'admission (19) du dispositif d'étalonnage (9) dans un prolongement axial du mandrin (22) et qui possède une sortie d'air de refroidissement (34) débouchant dans le dispositif d'étalonnage (9).

2. Dispositif selon la revendication 1, **caractérisé en ce que** dans le mandrin (22), plusieurs chambres de turbulences (23) sont disposées, dont les sorties d'air de refroidissement (24) débouchent dans une chambre collectrice (26) de laquelle part le tube de refroidissement (33).

3. Dispositif selon la revendication 1 ou 2, **caractérisé en ce que** le tube de refroidissement (33) et la chambre collectrice (26) sont isolés.

4. Dispositif selon la revendication 2 ou 3, **caractérisé en ce qu'**un dispositif de guidage (37) pour dévier le flux d'air de refroidissement (31) vers la paroi intérieure du corps creux extrudé (5) est disposé en amont de la sortie d'air de refroidissement (34).

5. Dispositif selon la revendication 4, **caractérisé en ce qu'**une conduite d'alimentation en eau (36) débouche dans la sortie d'air de refroidissement (34).
